# EUROPÄISCHE PATENTSCHRIFT

(11) **EP 1 995 096 B1**
(45) Veröffentlichungstag und Bekanntmachung des Hinweises auf die Patenterteilung: **08.01.2014**
(21) Anmeldenummer: 08002905.1
(22) Anmeldetag: 16.02.2008
(51) Int. Cl.: B60J 1/20, B60R 5/04

(54) **Heckfensterrollo mit Hutablage als Trägerelement**
Rear window roller with rear shelf as supporting element
Store de fenêtre angulaire doté d'un porte-chapeaux en tant qu'élément de support

(30) Priorität: 21.05.2007 DE 102007023810
(43) Veröffentlichungstag der Anmeldung: 26.11.2008
(73) Patentinhaber: BOS GmbH & Co. KG, 73760 Ostfildern (DE)
(72) Erfinder: Starzmann, Michael, 73666 Baltmannsweiler (DE); Walter, Herbert, 73061 Ebersbach (DE)
(74) Vertreter: Rüger, Barthelt & Abel

(56) Entgegenhaltungen:
- EP-A1- 1 724 137
- EP-A1- 1 775 164
- EP-A2- 1 666 291
- EP-A2- 1 782 979
- DE-A1- 10 231 626
- DE-A1- 19 934 198
- DE-A1-102004 020 930
- DE-A1-102006 000 879
- US-A1- 2007 051 475

## Beschreibung

Um die Aufheizung des Innenraums bei PKW durch Sonneneinstrahlung zu reduzieren und so die Klimaanlage zu entlasten werden häufig Heckscheibenrollos verwendet. Sie schützen außerdem die im Fond sitzenden Passagiere gegen unmittelbare Sonneneinstrahlung.

Grundsätzlich bestehen die Heckscheibenrollos aus einer Wickelwelle, an der mit einer Kante eine Rollobahn befestigt ist. Das von der Wickelwelle abliegende Ende der Rollobahn ist an einem Zugstab befestigt. Je nach Ausführung können die Enden des Zugstabs in Führungsschienen geführt sein, die in der Karosserie fest verankert sind. Die Führungsschienen können sich im Bereich der Seitenverkleidung der C-Säule befinden oder in einem Spalt zwischen der Heckscheibe und der Säulenverkleidung.

Die EP 1 782 979 A2 betrifft ein Heckfensterrollo für Kraftfahrzeuge, das eine Wickelwelle, eine Rollobahn, Führungsmittel und eine Auszugsschiene aufweist. An der Auszugsschiene ist eine Konturplatte angeordnet, die dazu dient, den segmentförmigen Restspalt zu verschließen.

Die Wickelwelle ist unterhalb der Hutablage angeordnet. Sie wird regelmäßig in einem eigenen Gehäuse oder auf einem eigenen Gerüst gelagert, das für sich in der Karosserie befestigt ist. Da der Auslaufschlitz für das Rollo die Hutablage in zwei Teile aufteilt, dient häufig das Gerüst gleichzeitig noch als Trägerelement für wenigstens einen Teil der Hutablage.

Ausgehend hiervon ist es Aufgabe der Erfindung, ein neues Heckscheibenrollo zu schaffen, das billig in der Herstellung ist. Diese Aufgabe wird erfindungsgemäß durch ein Heckscheibenrollo mit den Merkmalen des Anspruches 1 oder des Anspruches 11 oder des Anspruches 30 gelöst.

Gemäß dem ersten Lösungsansatz besteht derjenige Teil der Hutablage, der sich zwischen der Heckfensterscheibe und dem Auszugsschlitz befindet, aus einem nichtmetallischen Material, dessen Ausdehnungskoeffizient nahezu gleich dem von Stahl ist. Dadurch kann dieser Teil der Hutablage unmittelbar als Trägerelement dienen, an dem die Lagereinrichtungen für die Wickelwelle befestigt sind. Weder die Stahlkarosserie noch die üblicherweise auch aus Stahl bestehende Wickelwelle verändern in dem in Frage kommenden Temperaturbereich nennenswert ihre absoluten Größen, weil der relative Temperaturkoeffizient verhältnismäßig klein ist. Da die Hutablagenhälfte nahezu den gleichen Temperaturkoeffizienten aufweist, bleiben die Lagerungsverhältnisse für die Wickelwelle gleich.

Zu dem neuen Rollo gehört ferner eine Rollobahn, die mit einer Kante an der Wickelwelle befestigt ist und deren von der Wickelwelle abliegende Kante mit einem Zugstab versehen ist. Der Zugstab weist endseitig Gleiter auf, die in karosseriefesten Führungsschienen gleiten. Der Antrieb geschieht mit linienförmigen Schubgliedern, die ebenfalls in den Führungsschienen ausknicksicher geführt sind. Sie werden mit Hilfe eines Getriebemotors angetrieben, der an der als Trägerelement dienenden Hutablagenhälfte befestigt ist.

Die Vorspannung in der Rollobahn wird mit Hilfe eines Federmotors erzeugt, der der Wickelwelle zugeordnet ist und diese im Sinne des Aufwickelns der Rollobahn vorspannt.

Für den Fachmann ist klar, dass der Getriebemotor und der Federmotor auch die Plätze tauschen können. D.h. der Antrieb der Wickelwelle geschieht über den Getriebemotor, während der Federmotor die Schubglieder betätigt.

Die dermaßen aufgebaute Einheit kann als Ganzes in das Fahrzeug eingesetzt werden, womit einerseits ein wesentlicher Teil des Heckscheibenrollos montiert ist und gleichzeitig auch die Hutablage installiert ist. Die separate Montage von Heckscheibenrollo und Hutablage am Montageband seitens des Fahrzeugherstellers entfällt. Außerdem wird Gewicht eingespart sowie zusätzliche Teile.

Das Material für die Hutablagenhälfte kann ein Holzwerkstoff sein, der sich vorzugsweise aus Holzfasern oder Holzspänen zusammensetzt, die durch ein Bindemittel miteinander verbunden sind.

Die Hutablagenhälfte kann ein Pressformteil sein, an dem zusätzlich Erhöhungen und Vertiefungen ausgeformt sind, die ein einfaches Befestigen der Lagereinrichtung gestatten.

Das Bindemittel kann Lignin oder ein Kunstharz sein.

Um die Montage weiter zu vereinfachen, kann jede Lagereinrichtung mit einem rohrförmigen Kupplungsstück versehen sein, das zur Verbindung mit der jeweiligen Führungsschiene eingerichtet ist und in dem der Gleiter geführt ist.

Jede Führungsschiene kann für sich in der Fahrzeukarosserie befestigt sein.

Die Führungsschiene kann ein Kunststoffformteil oder ein Metällformteil, beispielsweise ein Aluminiumstrangpressformteil, sein.

Für jedes Schubglied ist zweckmäßigerweise ein Führungsrohr vorgesehen, das sich zwischen dem Getriebemotor und dem Kupplungsstück für die Führungsschiene erstreckt.

Ferner kann für jedes Schubglied ein Speicherrohr vorgesehen sein.

Zumindest das Speicherrohr kann durch eingeformte Nuten in dem Trägerelement gebildet sein.

Gemäß einem zweiten Lösungsansatz besteht die Hutablagenhälfte aus einem Kunststoffspritzteil, das gegenüber Stahl einen großen Temperaturkoeffizienten aufweist. Bei entsprechender Temperatur von ca. 60° kann die Hutablagenhälfte um ca. 10 mm länger wird als die Wickelwelle. Eine solche Längendifferenz ist dramatisch und würde ohne Gegenmaßnahmen zu Problemen führen. Erfindungsgemäß sind deswegen für die Wickelwelle Lagereinrichtungen vorgesehen, die an dem Trägerelement verschieblich befestigt sind. Mit Hilfe von Abstandshaltemitteln werden die Lagereinrichtungen temperaturunabhängig im richtigen Abstand gehalten. Hierzu haben naturgemäß die Abstandshaltemittel einen Temperaturgang, der dem Temperaturgang der Karosserie bzw. Wickelwelle zumindest recht ähnlich, vorzugsweise gleich ist. Die Funktion der Hutablagenhälfte als Trägerelement und sozusagen als Grundrahmen für den Aufbau der Rolloeinrichtung bleibt dennoch erhalten.

Zwischen den Lagereinrichtungen ist die Wickelwelle endseitig gelagert. An der Wickelwelle ist in der üblichen Weise die Rollobahn mit einer Kante befestigt, deren andere von der Wickelwelle abliegenden Kante mit einem Zugstab verbunden ist. Der Zugstab trägt endseitig Gleiter, die in zwei Führungsschienen laufen, die in dem Fahrzeug befestigt sind. Die Führungsschienen beginnen bei der Hutablage und dienen außerdem dazu, linienförmige Schubglieder ausknicksicher zu führen.

Mittels eines Federmotors wird die Wickelwelle im Aufwickelsinne der Rollobahn vorgespannt. Die Bewegung des Zugstabs geschieht über die Schubglieder, die durch einen Getriebemotor angetrieben sind.

Für den Fachmann ist klar, dass der Getriebemotor und der Federmotor auch die Plätze tauschen können. D.h. der Antrieb der Wickelwelle geschieht über den Getriebemotor, während der Federmotor die Schubglieder betätigt.

Jede Lagereinrichtung kann mit einem rohrförmigen Kupplungsstück versehen sein, das zur Verbindung mit der jeweiligen Führungsschiene eingerichtet ist und in dem der Gleiter geführt ist. Hierdurch wird die Montage erleichtert, weil zwangsläufig über das Kupplungsstück die fluchtende Verbindung hergestellt ist und außerdem vor der Montage der Anordnung im Fahrzeug der Zugstab einwandfrei gehalten ist.

Jede Führungsschiene kann für sich in der Fahrzeugkarosserie befestigt sein.

Die Führungsschiene kann ein Kunststoffformteil sein, sie kann auch aus Metall bestehen, beispielsweise ein Aluminiumstrangpressformteil sein.

Um ein Ausknicken der Schubglieder zwischen Getriebemotor und Führungsschiene zu vermeiden, sind Führungsrohre vorgesehen, die sich bis zu dem Kupplungsstück oder der Führungsschiene erstrecken. Das Führungsrohr kann vorzugsweise, zumindest abschnittsweise, biegeelastisch sein.

Von dem Getriebemotor kann für jedes Schubglied ein Speicherrohr ausgehen. Das Speicherrohr kann in sich biegefest sein, beispielsweise indem es aus Metall hergestellt ist.

Wenn das Speicherrohr an seinem von dem Getriebemotor abliegenden Ende starr mit der benachbarten Lagereinrichtung verbunden ist, kann das Speicherrohr gleichzeitig das Abstandshaltemittel bilden.

Eine andere Möglichkeit für das Abstandshaltemittel besteht in der Karosserie selbst.

Dabei kann die zum Verschieben der Lagereinrichtungen auf der Hutablagenhälfte gehalterten Lagereinrichtungen durch Verbindungsmittel übertragen werden, die die Lagereinrichtung mit der Karosserie verbinden. Diese Verbindungsmittel können von der Kupplungseinrichtung und der jeweiligen Führungsschiene gebildet sein. Eine andere Möglichkeit besteht darin, Zapfen und Ösen zu verwenden, wobei beispielsweise der Zapfen an der Lagereinrichtung und die Öse an der Karosserie vorgesehen ist.

Um hässliche Seitenspalte zu vermeiden bzw. wenn die Speicherrohre als Abstandshaltemittel verwendet werden, ist es zweckmäßig, wenn die Hutablagenhälfte etwa auf der Mitte ihrer Längserstreckung, d.h. auf der Höhe der Mitte der Wickelwelle eine Zentriereinrichtung, vorzugsweise einen Zapfen aufweist, der in eine entsprechende Öffnung in der Ka-rosserie eingreift. Dadurch liegt die Mitte der Hutabla-genhälfte, bezogen auf die Breite des Fahrzeugs, fest. Bei Temperaturänderungen wirkt sich die Längenänderung damit auf beide Seiten der Hutablagenhälfte aus, was verhindert, dass sich bei ungünstigen Reibungsbedingungen unter Umständen auf einer Seite ein großer Spalt auftut, während auf der anderen Seite kein Spalt zwischen der Seitenverkleidung und der Hutablagenhälfte zu erkennen wäre.

Das als Kunststoffformteil hergestellte Trägerelement in Gestalt der Hutablagenhälfte kann an der Unterseite mit Rippen versehen sein, die sechseckige Zellen begrenzen, so dass sich eine Wabenkonfiguration ergibt.

Zumindest für die Speicherrohre können in die Unterseite der Hutablagenhälfte in Längrichtung verlaufende Nuten eingeformt sein, die zusammen mit einem daran verrastbaren länglichen Deckel Speicherrohre für die Schubglieder bilden. Hierdurch vereinfacht sich die Montage erheblich, weil das aufwändige Anschließen und Verlegen der Speicherrohre entfällt.

Gemäß einem dritten Lösungsansatz weist das Heckfensterrollo ein Trägerelement auf, das durch die Hutablagenhälfte gebildet ist, die sich zwischen dem Auszugsschlitz und der Heckscheibe erstreckt. Die Hutablagenhälfte ist als Kunststoffformteil ausgebildet, das einen anderen Ausdehnungskoeffizienten aufweist als die aus Stahl bestehende Wi-ckelwelle bzw. die Karosserie. An dieser Hutablagenhälfte, die als Grundrahmen zum Aufbau des Heckscheibenrollos dient, sind Lagereinrichtungen starr und unbeweglich befestigt. Zwischen diesen Lagereinrichtungen ist die Wickelwelle schwimmend in Axialrichtung gelagert. Mit Hilfe von elastischen Ausgleichsmitteln wird die Rollowelle zwischen den Lagereinrichtungen zentriert.

Zu dem Rollo gehören ferner zwei Führungsschienen die in dem Fahrzeug befestigt sind und die bei der Hutablage beginnen. In der Führungsschiene laufen Gleiter, die an den Enden des Zugstabs befestigt sind. Ferner dienen die Führungsschienen zum ausknicksicheren Führen von linienförmigen Schubgliedern.

Ein Federmotor ist der Wickelwelle zugeordnet um die Wickelwelle im Sinne des Aufwickelns der Rollobahn auf die Wickelwelle vorzuspannen. Mittels eines Getriebemotors, der an dem Trägerelement in Gestalt der Hutablagenhälfte befestigt ist, werden die beiden linienförmigen Schubglieder synchron und in entgegengesetzter Richtung in Bewegung gesetzt, wenn die Rollobahn ausgefahren bzw. eingefahren werden soll.

Für den Fachmann ist klar, dass der Getriebemotor und der Federmotor auch die Plätze tauschen können. D.h. der Antrieb der Wickelwelle geschieht über den Getriebemotor, während der Federmotor die Schubglieder betätigt.

Die Montage wird erleichtert, wenn jede Lagereinrichtung mit einem Kupplungsstück versehen ist, das bereits im vormontierten Zustand die Gleiter des Zugstabs aufnimmt.

Jede Führungsschiene ist.für sich in der Fahrzeugkarosserie befestigt. Die Führungsschiene kann ein Kunststoffformteil oder ein Metallformteil sein. In beiden Fällen ist es zweckmäßig, wenn der der Wickelwelle benachbarte Abschnitt der Führungsschiene biegeelastisch ist, um eine Seitwärtsbewegung ausführen zu können, wenn sich wegen der Längenausdehnung der Hutablagenhälfte die Lagereinrichtungen quer zum Fahrzeug bewegen.

Für jedes Schubglied kann ein Führungsrohr vorgesehen sein, das mit dem Kupplungsstück oder der Führungsschiene über ein elastisches Zwischenteil verbunden ist.

Vorzugsweise ist die Hutablagenhälfte etwa in dem mittleren Bereich über Zentriermittel an die Karosserie angebunden, damit die Längendifferenz bei Erwärmung oder Abkühlung des Fahrzeugs gleichmäßig auf beide Enden der Hutablagenhälfte verteilt wird.

Damit die Selbstzentrierung der Wickewelle zwischen demzufolge des Temperaturgangs sich voneinander weg bzw. aufeinander zu bewegenden Lagereinrichtungen nicht beeinträchtigt wird, ist der Federmotor über eine Kupplung angekuppelt, die lediglich Drehmomente überträgt.

Als elastische Ausgleichsmittel können zwei Federn vorgesehen sein, die sich vor jeder Stirnseite der Wickelwelle befinden und die die Wickelwelle zwischen den Lagereinrichtungen zentriert. Diese Federn können zweckmäßigerweise Schraubendruckfedern sei oder beispielsweise auch ein Tellerfederpacket.

In der Unterseite der Hutablagenhälfte können Nuten enthalten sein, denen Deckel zugeordnet sind und die zusammen mit dem Deckel ein Speicherrohr für das Leertrum eines jeweiligen Schubgliedes bilden.

Ferner können zur Versteifung auf der Unterseite Rippen ausgebildet sein, die sechseckige Zelle ähnlich einer Wabenstruktur begrenzen.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenenfalls vorhandenen Detail. Die Begriffe "oben" und "unten" bzw. "vorne" und "hinten" beziehen sich auf die normale Einbaulage bzw. Terminologie bei Kraftfahrzeugen.
- Fig. 1: zeigt einen Blick auf die Heckpartie eines Kraftfahrzeug bei eingefahrenem Heckscheibenrollo.
- Fig. 2: veranschaulicht das Antriebskonzept des Heckscheibenrollos, in einer stark schematisierten Darstellung.
- Fig. 3 bis 7: veranschaulicht anhand eines Abschnitts einer Hutablagenhälfte ein erfindungsgemäße Ausführungsbeispiel unter Verwendung einer nichtmetallischen Hutablagenhälfte, in einer perspektivischen Explosionsdarstellung.
- Fig. 8: zeigt einen Ausschnitt aus einer Hutablagenhälfte nach einem der Figuren 3 bis 7 unter Veranschaulichung der Einbettung des Speicherrohrs in der Hutablagenhälfte.

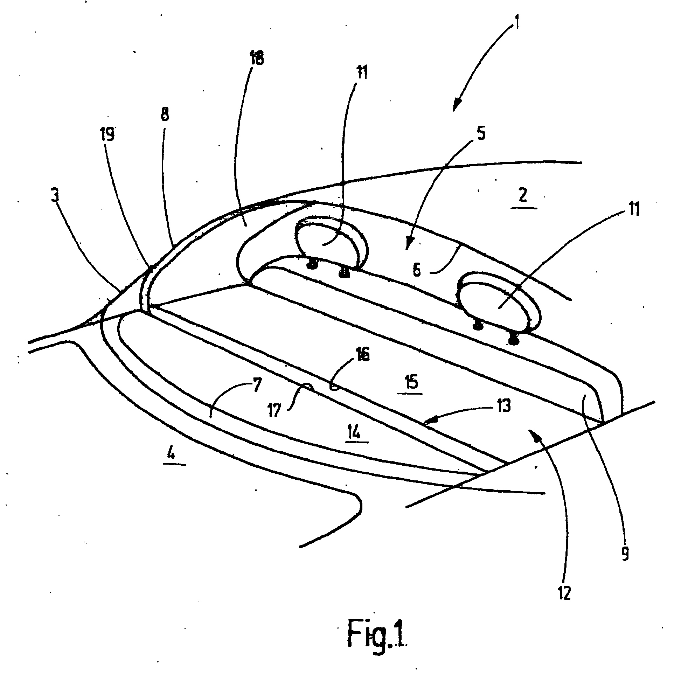

Fig.1 veranschaulicht einen Blick auf einen Ausschnitt der Heckpartie eines Kraftfahrzeugs 1. Zu erkennen ist ein Dach 2, eine linke C-Säule 3 sowie eine Kofferraumdeckel 4. Die mit der linken C-Säule 3 korrespondierende rechte C-Säule ist weggeschnitten und somit nicht erkennbar.

Oberhalb des Kofferraumdeckels 4 enthält das Fahrzeug ein Heckfenster 5, das von einer Oberkante 6, einer Unterkante 7 sowie zwei Seitenkanten begrenzt ist, von denen wegen der abgeschnittenen Darstellung lediglich die Seitenkante 8 als Bestandteil der C-Säule 3 veranschaulicht ist.

Im Inneren des Kraftfahrzeugs 1 ist eine Rücksitzlehne 9 mit darauf stehenden Kopfstützen 11 zu erkennen. Zwischen der Rückseite der Rücklehne 9 und der Unterkante 7 erstreckt sich eine Hutablage 12, die durch einen Auszugsschlitz 13 in zwei Hutablagehälften 14 und 15 aufgeteilt ist. Der Schlitz 13 wird von zwei zueinander parallelen Schlitzrändern 16 und 17 begrenzt, die sich über die gesamte Breite der Hutablage 12 erstrecken. Bei der praktischen Ausführungsform ist der Auszugsschlitz 13 von einem Auszugsprofil verdeckt, das hier der aus Gründen der Übersichtlichkeit weggelassen ist.

Ferner ist auf der Innenseite der C-Säule 3 eine Innenverkleidung 18 zu sehen, die eine Führungsschiene 19 enthält, die unterhalb des Schlitzes 13 in der Hutablage 12 beginnt, von dort aus sich an die Seitenkante 3 des Fensters 5 annähert und im Übrigen dem Verlauf der Seitenkante 3 bis zu der Oberkante 6 folgt.

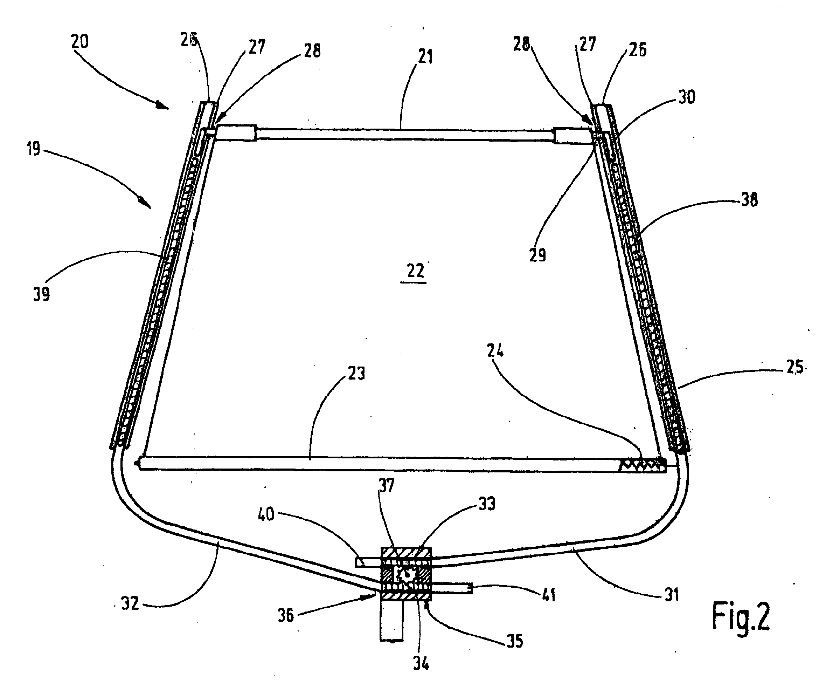

Unterhalb der Hutablage 12 befindet sich ein Heckfensterrollo 20, dessen prinzipieller Aufbau in Fig. 2 gezeigt ist.

Zu dem Heckscheibenrollo 20 gehört das bereits erwähnte Auszugsprofil 21, an dem mit einer Kante eine Rollobahn 22 befestigt ist. Die andere Kante der Rollobahn 22 ist mit einer rohrförmigen Wickelwelle 23 verbunden, die unterhalb der Hutablagenhälfte 14 endseitig drehbar gelagert ist. Innerhalb der Wickelwelle 23 befindet sich ein Federmotor 24, durch den die Wickelwelle 23 im Sinne eines Aufwickelns der Rollobahn 22 auf die Wickelwelle 23 vorgespannt ist. Der Federmotor 24 ist dazu einends mit der Wickelwelle 23 verbunden und andernends an einer entsprechenden Karosseriestruktur festgesetzt.

Das Auszugsprofil 21 wird endseitig in der in Fig. 1 erkennbaren Führungsschiene 19 und der in der weggeschnittenen C-Säule enthaltenen Führungsschiene 25 geführt. Die beiden Führungsschienen 16 und 25 sind aufeinander ausgerichtet und liegen in einer gemeinsamen Fläche deren Erzeugen eine Gerade ist.

In Fig. 2 sind die beiden Führungsschienen 16, 25 gestreckt gezeichnet in der Praxis folgen sie jedoch, zumindest angenähert, dem Verlauf der Seitenkante des Heckfensters 5.

In jeder Führungsschiene 19, 25 ist eine Führungsnut enthalten, die sich aus einer Nutenkammer 26 und einem Nutenschlitz 27 zusammensetzt. Die Weite der Nutenkammer 26 ist größer als die Weite des Nutenschlitzes 27, so dass sich insgesamt eine hinterschnittene Führungsnut ergibt.

Das Auszugsprofil 21 ragt mit entsprechenden Führungsstücken 28 in die jeweilige Führungsschiene 16, 25 hinein. Jedes Führungsstück 28 setz sich aus einem Halsteil 29 und einem Gleiter 30 zusammen, der im Querschnitt an den Querschnitt der Nutenkammer 26 angepasst ist. Der Halsteil 29 ist in der Dicke kleiner, damit er durch den Nutenschlitz 27 hindurchpasst.

An unteren Ende der beiden Führungsschienen 19, 25 schließen sich steife Führungsrohre 31, 32 an, die die jeweilige Nutenkammer 26 mit einer zugehörigen Bohrung 33, 34 in einem Getriebegehäuse 35 verbinden. Das Getriebegehäuse 35 gehört zu einem Getriebemotor 36, auf dessen Ausgangswelle drehfest ein Zahnrad 37 sitzt. Mit Hilfe des Zahnrads 37 werden formschlüssig zwei biegeelastische linienförmige Schubglieder 38, 39 angetrieben. Die beiden Schubglieder 38 und 39 haben die Gestalt einer im Querschnitt kreisrunden Zahnstange mit einer wendelförmig umlaufenden Verzahnung. Ihre Teilung entspricht der Teilung des Ausgangszahnrades 37. Da die beiden Schubglieder 38, 39 an diametral gegenüberliegenden Seiten des Ausgangszahnrads 36 kämmen, werden sie entgegengesetzt mit derselben Geschwindigkeit vorgeschoben oder zurückgezogen, wenn der Getriebemotor 36 in Gang gesetzt wird.

Speicherrohre, die das Leertum des jeweiligen Schubglieds 38, 39 aufnehmen sind bei 40 und 41 angedeutet.

Zum Ausfahren des in den Figuren gezeigten Heckscheibenrollos 20 wird der Getriebemotor 36 mit der entsprechenden Umdrehung in Gang gesetzt, wodurch die Schubglieder 38, 39 in Richtung auf das obere Ende der Führungsschienen 19, 25 in Gang gesetzt werden. Hierbei schieben sie die Gleiter 30 des Auszugsprofils 21 vor sich her. Dadurch wird das Auszugsprofil 21 in Richtung auf die Oberkante 6 des Heckfensters 5 bewegt, wodurch gleichzeitig die Rollobahn 22 von der Wickelwelle 23 abgezogen wird. Der entgegengesetzt wirkende Federmotor 34 hält die Rollobahn 22 gespannt.

Zum Einfahren der Rollobahn 22 wird der Getriebemotor 35 mit der umgekehrten Drehrichtung in Gang gesetzt._ Hierdurch werden die Schubglieder 38, 39 aus den Führungsschienen 19, 25 nach unten in Richtung auf die Wickelwelle 23 zurückgezogen. Der in der Wickelwelle 23 enthaltene Federmotor 24 wickelt entsprechend die Rollobahn 22 auf der Wickelwelle 23 auf, jeweils soweit es die Position der Schubglieder 37, 38 zulässt.

Beim Bewegen des Auszugsprofils 21 längs der Führungsschienen 19, 25 ändert sich dessen effektive Länge, indem die Halsteile 29 herausgezogen oder in das Mittelstück des Auszugsprofils zurückgedrückt werden. Hierdurch wird der sich ändernde Abstand der Führungsschienen 19 und 25 ausgeglichen.

Wie bereits oben ausgeführt, besteht der erfinderische Gedanke in der Verwendung der hinteren Hutablagenhälfte als tragendes Strukturelement für das Rollo 20. Die Hutablagenhälfte 14 bildet somit das Gerüst oder den Rahmen, auf dem das Rollo 20 aufgebaut ist, d.h. die Hutablagenhälfte 14 ist selbst Bestandteil des Rollos 20.

Damit treten wesentlich zu beachtende Randbedingungen auf. Die Wickelwelle des Rollos besteht üblicherweise aus Festigkeits- und Kostengründen aus Stahl mit einer relativ kleinen temperaturabhängigen Längenänderung in dem interessierenden Temperaturbereich zwischen ca. -20° und +70°, wie sie in Kraftfahrzeugen auftreten können. Die Längenänderung der aus Stahl bestehenden Wickelwelle entspricht damit im Wesentlichen auch der Gestaltsänderung, die die ebenfalls aus Stahlblech bestehende Karosserie zeigt. Beide haben denselben relativen Temperaturausdehnungskoeffizienten. Da sie auf der Höhe der Hutablage gleiche Abmessungen haben, sind auch die Längenänderungen gleich.

Als Material für die Hutablage selbst kommt aus verschiedenen Gründen Metall nicht in Frage. Gründe hierfür sind die Kosten, das Gewicht, der Herstellungsaufwand und dergleichen. Es muss deswegen nach Maßnahmen gesucht werden, um die nichtmetallische Hutablage an die im interessierenden Temperaturbereich auftretende Längenänderung der Wickelwelle bzw. Karosserie anzupassen.

Die Hutablagenhälfte weist entsprechend der Breite des Fahrzeugs eine beträchtliche Länge von mehr als 1200 mm auf, was bei Verwendung von Kunststoffmaterial für die Hutablagenhälfte beispielsweise zu einen Längendifferenz gegenüber der Wickelwelle von über 10 mm führt.

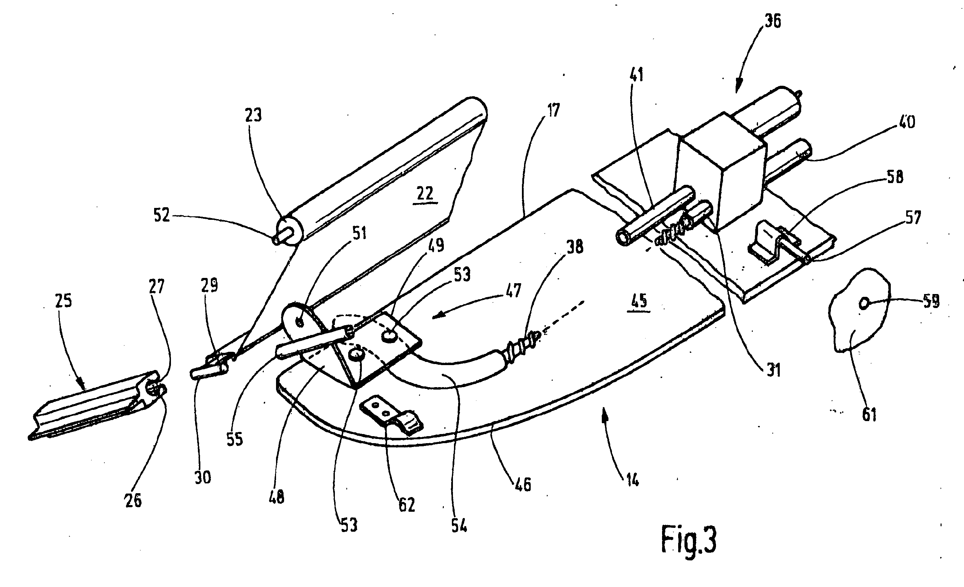

Gemäß einem ersten Ausführungsbeispiel, wie es in Fig. 3 veranschaulicht ist, besteht die Hutablagenhälfte 14 aus einem Holzwerkstoff, beispielsweise einer Hartfaserplatte oder einer besonders verfestigten Pappkartonkonstruktion. Hauptbestandteil sind Holzfasern, die durch ein geeignetes Bindemittel miteinander verbunden sind. Das Bindemittel kann ein Harz sein oder Lignin. Insgesamt kommt damit eine Hutablagenhälfte 14 zustande, die einen extrem kleinen Temperaturkoeffizienten zeigt.

Der erfindungsgemäße Aufbau wird in Fig. 3 anhand des rechten Abschnitts der Hutablagenhälfte 14 in einer perspektivischen Ansicht auf deren Unterseite und teilweise Explosionsdarstellung erläutert.

Die Hutablagenhälfte 14 weist eine vom Betrachter wegzeigende Oberseite sowie einem dem Betrachter zugekehrte Unterseite 45 auf. Sie wird nach vorne durch eine den Schlitzrand 17 bildende gerade Kante und eine rückwärtige Kante 46 begrenzt, die der Kontur des Innenraums auf der Höhe der Hutablage 12 im Bereich der Unterkante des Heckfensters 5 von einer C-Säule bis zur anderen C-Säule entspricht.

Die Hutablagenhälfte 14 ist in Fig. 3 als ebenes Bauteil gezeigt um zu vermeiden, dass die Zeichnung mit dem für das Verständnis der Erfindung nicht wesentlichen Details überladen wird. Tatsächlich ist jedoch die Hutablagenhälfte 14 mehr oder weniger stark strukturiert und hat beispielsweise auch zusätzliche im Bereich der Hinterkante 46 angeordnete Luftauslassschlitze sowie andere Strukturmaßnahmen zur Verbindung mit der vorderen Hutablagenhälfte 15.

Insbesondere sind an der Unterseite der Hutablagenhälfte 14 Strukturelemente vorhanden, die die Hutablagenhälfte 14 bezüglich ihrer Längserstreckung entsprechend der Quererstreckung des Fahrzeugs hinreichend biegesteif machen, damit sich die Hutablagenhälfte 14 bei Belastung von oben nicht wesentlich durchbiegt.

Die Wickelwelle 23 ist zwischen zwei Lagereinrichtungen 47 drehbar gelagert, die spiegelbildlich zueinander im Bereich der Enden der Hutablagenhälfte 14 angeordnet sind.

Da die beiden Lagereinrichtungen 47 zueinander spiegelbildlich sind, genügt es, wenn eine der beiden Lagereinrichtungen ausführlich erläutert wird.

Die Lagereinrichtung 47 ist ein Kunststoffform- oder Stahlbiegeteil, das einen von der Unterseite 45 aufragenden Schenkel 48 sowie einen an der Unterseite 45 angeordneten Schenkel 49 bildet. Der Schenkel 48 enthält eine Lagerbohrung 51 zur Lagerung eines Achszapfens 52 der Wickelwelle 23.

Mit dem Schenkel 49 ist die Lagereinrichtung 47 beispielsweise über Schrauben oder Nieten 53 starr und unbeweglich mit der Hutablagenhälfte 14 verbunden.

Die Öffnung 51 bei der anderen Lageranordnung 47 ist so gestaltet, dass sie ein Widerlager für den Federmotor 24 bilden kann.

Etwa in der Mitte der Hutablagenhälfte 14, bezogen auf ihre Längserstreckung, sitzt der Getriebemotor 36, von dem zu beiden Seiten die Führungsrohre 32 bzw. 31 sowie die Speicherrohre 40 und 41 ausgehen.

In dem Führungsrohr 31 ist, wie bereits erläutert, das zugehörige linienförmige Schubglied 38 ausknicksicher geführt. In einem Endbereich bei 54 ist das Führungsrohr 31 elastisch biegsam schlauchähnlich gestaltet. Mit seinem freien Ende steckt der elastische Abschnitt 54 auf einem Kupplungsstück 55, das starr an der Außenseite des Schenkels 48 befestigt ist. Das Kupplungsstück 55 dient dazu, das Führungsrohr 31 mit der Führungsschiene 19 bzw. 25 zu verbinden. Das Kupplungsstück 55 ist rohrartig und wenigstens an dem von dem Betrachter abliegenden Ende also in dem Bereich in dem es über die Kante 17 verläuft, mit einem Schlitz versehen, der den Durchtritt des Halsteils 29 des Führungsstücks 28 ermöglicht. Die lichte Weite des Kupplungsstücks 55 ist so bemessen, dass der Gleiter 30 mit hinreichendem Spiel in dem Kupplungsstück 55 gleiten kann.

Zur Zentrierung der Hutablagenhälfte 14 in der Karosserie ist etwa in der Mitte der Hutablagenhälfte 14, an deren Unterseite 45 ein Zentrierzapfen 57 vorgesehen, der in einer entsprechenden Aufnahme 58 sitzt, die an der Unterseite 45 befestigt ist. Der Zentrierzapfen 57 wirkt mit einer Öffnung 59 in der Karosserie zusammen, von der ein Abschnitt 61 schematisch veranschaulicht ist.

Schließlich können an der Unterseite 45 noch Federhaken 62 vorgesehen sein, mit denen entsprechende Flansche untergriffen werden, auf denen die Hutablagenhälfte 14 randseitig aufliegt. Mit Hilfe der Federhaken 62 wird verhindert, dass sie Hutablagenhälfte 14 nach oben an gehoben werden kann.

Vor der Montage im Fahrzeug kann das Rollo 20 zusammen mit der Hutablagenhälfte 14 komplett vormontiert werden. Nach der Vormontage stecken die Gleiter, jeder für sich, in dem zugehörigen Kupplungsstück 55, wobei der Halsteil 29 an der vom Betrachter wegzeigenden Kante des Schenkels 48 anliegt. Durch den eingebauten Federmotor 24 wird die Anordnung auf Spannung gehalten.

Die Hutablagehälfte 14 kann so zusammen mit den daran installierten Teilen des Rollos 20 an das Montageband für das Fahrzeug geliefert werden. Am Montageband wird die Hutablagenhälfte montiert, wobei gleichzeitig die Kupplungsstücke 55 an beiden Seiten der Hutablagenhälfte 14 in die zugehörige Führungsschiene 19 bzw. 25 eingefädelt werden. Die Führungsschiene 19 und 25 können, wie in Fig. 3 schematisch angedeutet, eine separate Schiene aus Aluminiumstrangpressprofil sein oder eine Kunststoffschiene oder sie können integral ein Bestandteil der Seitenverkleidung der C-Säule sein.

Nach der Montage ist das Rollo 20 in derselben Weise funktionsfähig, wie dies zuvor erläutert wurde.

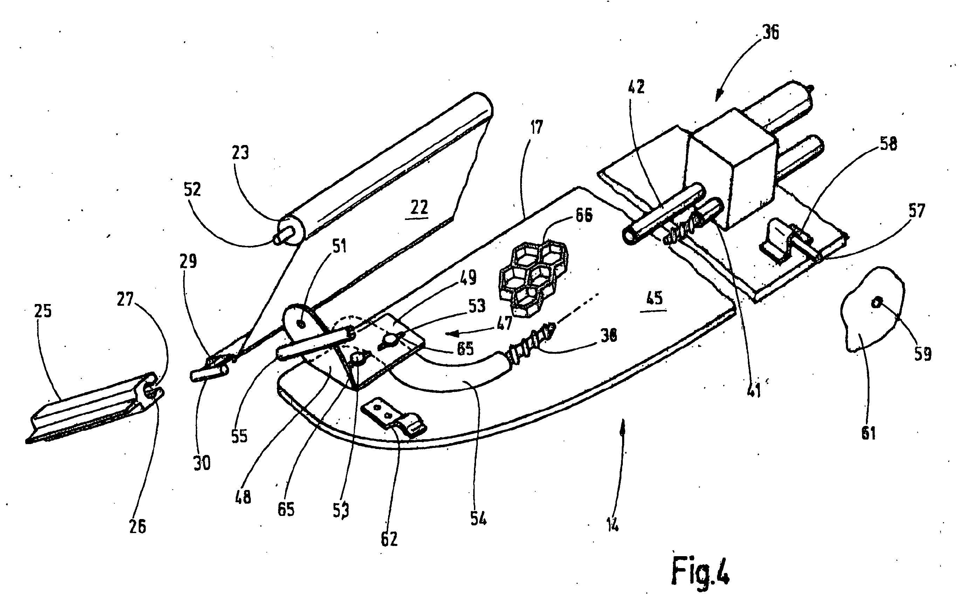

Fig. 4 zeigt ein weiteres Ausführungsbeispiel, bei dem die Hutablagenhälfte 14 aus einem Kunststoff besteht, der einen gegenüber Stahl großen Temperaturkoeffizienten aufweist. Die Hutablagenhälfte 14 kann aus einem streifenförmigen Pre-Preg hergestellt oder in bekannter Weise gespritzt sein. Um den großen Temperaturkoeffizienten zu beherrschen, sind gegenüber dem vorigen Ausführungsbeispiel eine Reihe von Änderungen erforderlich. Die nachfolgende Beschreibung beschränkt sich auf die für das Verständnis der Erfindung erforderlichen Abwandlungen. Im Übrigen gilt die Figurenbeschreibung für Fig. 3, weshalb für die einzelnen Bauelemente, soweit sie in Fig. 4 wiederkehren, dieselben Bezugszeichen vorgesehen sind.

Um den größeren Temperaturkoeffizienten und die damit verbundene größte Längenänderung zu beherrschen, sind abweichend von einem Ausführungsbeispiel nach Fig. 3 bei dem Ausführungsbeispiel nach Fig. 4 die beiden Lagereinrichtungen 47 verschieblich auf der Unterseite 45 angeordnet. Hierzu enthält der Schenkel 49 beispielsweise zwei Langlöcher 65, die sich mit ihrer Längsachse parallel zu dem Schlitzrand 17 erstrecken. Die Schrauben oder Nieten 53 führen hindurch und sorgen dafür, dass der Schenkel 49 in Richtung parallel zu dem Schlitz 17 verschiebbar ist, jedoch im Übrigen mit hinreichender Kraft klapperfrei gegen die Unterseite 45 angedrückt wird. Damit wird es möglich, den Abstand zwischen den beiden Lagereinrichtungen 47, unabhängig von der thermischen Längenänderung der Hutablagenhälfte 14 hinreichend konstant zu halten.

Als Abstandshalter wird hier die Fahrzeugkarosserie verwendet. Der Abstand zwischen den beiden Lagereinrichtungen 47 wird mit Hilfe der beiden Führungsschienen 19 und 25 erzwungen, die fest in der Karosserie verankert sind und die andererseits über das steife Kupplungsstück 55 hinreichend starr mit der jeweils zugehörigen Lagereinrichtung 47 verbunden sind. Durch diese starre und steife mechanische Verbindung zwischen der Karosserie und der Lagereinrichtung 47 vermittels der Führungsschienen und den Kupplungsstücken 55, bleibt auch die Zentrierung der Wickelwelle 23 zwischen den Lagereinrichtungen 47 temperaturunabhängig aufrecht erhalten. An sich wären keine weiteren Maßnahmen notwendig, um die Anordnung funktionsfähig zu erhalten.

Um aber zu vermeiden, dass zufolge der schwankenden Länge der Hutablagenhälfte 14 in Verbindung mit der Reibung, den der Schenkel 49 jeder Lagereinrichtung 47 an der Unterseite 45 erfährt, die Hutablagenhälfte 14 allmählich zu einer Fahrzeugseite hin wandert, ist der bereits erwähnte Zentrierstift 57 erforderlich. Zufolge der großen Längendifferenz, die temperaturbedingt auftreten kann, könnte sich an einer Seite des Fahrzeugs ein Spalt von in der Größenordnung 10 mm auftun. Um diesen Spalt symmetrisch auf beiden Seiten aufzuteilen ist der Zentrierzapfen 57 vorgesehen, der etwa in der Mitte, bezogen auf die Längserstreckung der Hutablagenhälfte 14 angeordnet ist. Er steckt, wie erwähnt, in der karosseriefesten Bohrung 59, damit auf diese Weise die Mitte der Hutablagenhälfte 14 fixiert wird. Die Längenänderungen, die temperaturbedingt sind, wirken sich somit zwangsläufig auf beide Seite in der gleichen Weise aus.

Um die Längenausdehnung nicht zu behindern, sind die bereits erwähnten Haken oder Laschen 62 vorgesehen, die mit der Unterseite 45 ein Maul bilden, dass nach hinten, bezogen auf die Fahrzeuggeometrie, offen ist und auch seitlich auf dem betreffenden Karosserieflansch beweglich ist.

Zur Erhöhung der Biegesteifigkeit der Hutablagenhälfte 14 können auf der Unterseite 45 Rippen 66 ausgebildet sein, die sechseckige Zellen umgeben, womit sich das Muster einer Bienenwabe ergibt.

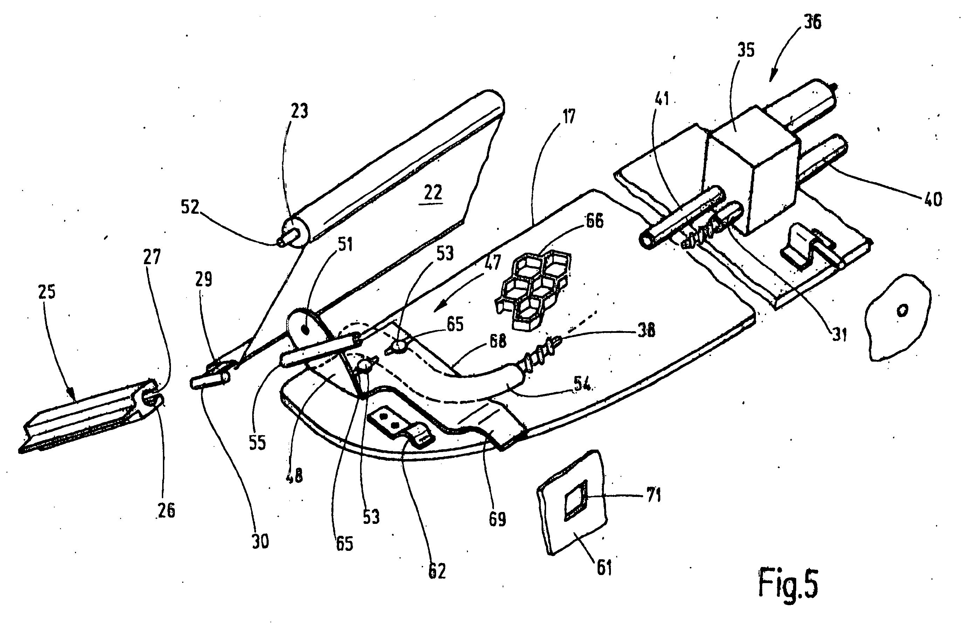

Sollte die Festigkeit der Führungsschienen 19 und 25 nicht ausreichend sein, um den Abstand zwischen den Lagereinrichtungen 47 zu gewährleisten, beispielsweise weil die Führungsschienen 19 und 25 Kunststoffform oder -spritzteile sind, die an der Seitenverkleidung befestigt sind, kann eine Lösung eingesetzt werden, wie sie in Fig. 5 gezeigt ist. Diese Lösung unterscheidet sich von der Lösung nach Fig. 4 durch eine weitere Lasche 68, die in einer Zunge 69 endet. Die Lasche 68 ist starr mit beispielsweise dem Schenkel 49 verbunden, der im Übrigen in derselben Weise mit der Unterseite 45 verbunden ist, wie dies eingehend in Verbindung mit Fig. 4 erläutert wurde.

Die Zunge 69 ist dazu vorgesehen, in eine entsprechende Öffnung 71 in der Karosserie 61 einzugreifen. In die Öffnung 71 greift die Zunge 69 hinreichend spielfrei ein, bezogen auf die Richtung parallel zu der Längserstreckung der Kante 17. Somit wird wiederum unter Zuhilfenahme der Karosserie der Abstand und die Zentrierung der beiden Lagereinrichtungen 47, bezogen auf die Karosserie, sichergestellt, unabhängig davon, ob sich die aus Kunststoff bestehende Hutablagenhälfte 14 bei niedriger Temperatur zusammenzieht oder bei höherer Temperatur nennenswert ausdehnt. Die Zentrierung der Hutablagenhälfte 14 selbst wird wiederum unter Zuhilfenahme des Zentrierstiftes 57 gewährleistet, der sich in der Mitte der Hutablagenhälfte 14 befindet.

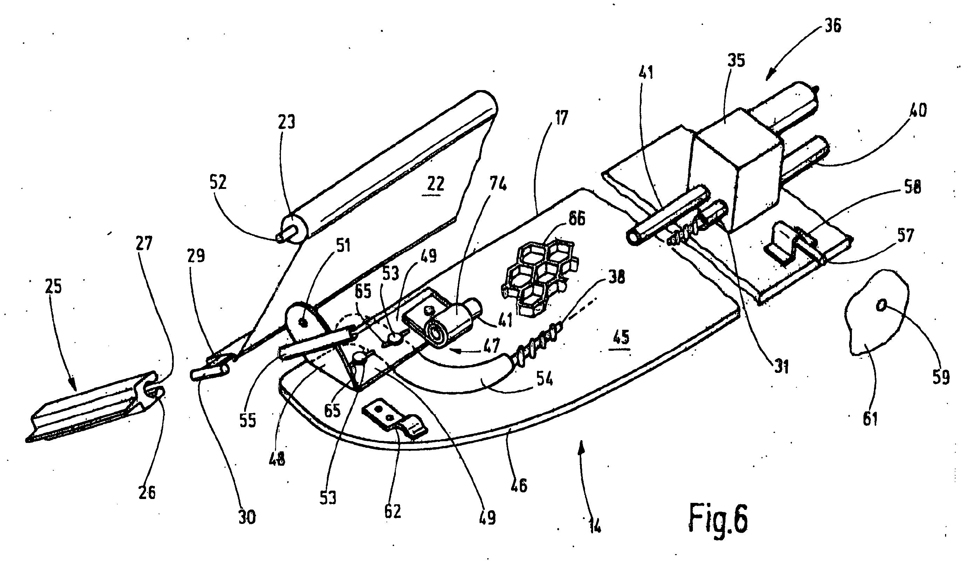

Bei der Ausführungsform nach Fig. 6 besteht die Hutablagenhälfte 14, wie bei dem Ausführungsbeispielen nach den Fig. 4 bis 5 aus einem Kunststoffmaterial mit großem Temperaturkoeffizienten. Anstatt jedoch die Karosserie des Fahrzeugs als Abstandshalter zu verwenden, werden hierzu bei der Ausführungsform nach Fig. 6 die Speicherrohre 40 und 41 herangezogen. Die Speicherrohre 40 und 41 bestehen aus Metall, beispielsweise einem Aluminiumrohr. Der thermische Ausdehnungskoeffizient von Aluminium ist zwar deutlich größer als der von Stahl, jedoch nicht so stark unterschiedlich als dass auf die hier interessierende Länge von ca. 500mm nach außen deutlich sichtbare Längendifferenzen auftreten, die zu einer Dezentrierung der Rollobahn 22 im Fahrzeug führen könnten.

Im Einzelnen ist die Anordnung so getroffen, dass beispielsweise das Speicherrohr 41 starr und unverschieblich mit dem Getriebegehäuse 35 verbunden ist. Das freie Ende des Speicherrohrs 41 steckt in einer Schelle 74, die unverrückbar mit dem Schenkel 49 der Lagereinrichtung 47 verbunden ist. Gleiches gilt für die Ausgestaltung und Anbindung des Speicherohrs 40. Da sich das Getriebegehäuse 45 des Getriebemotors 36 in der Mitte der Hutablagenhälfte 14, bezogen auf deren Längserstreckung und damit auf der Höhe des Zentrierzapfens 57, befindet, erzwingen die Speicherohre 40, 41 einen konstanten Abstand jeder Lagereinrichtungen 47 voneinander und von dem Zentrierzapfen 57, unabhängig davon, wie sich die Länge der Hutablagenhälfte zufolge ihres Temperaturgangs ändert. Selbst wenn die Speicherrohre 40 und 41 aus Platzgründen geringfügig abgekröpft verlaufen, reicht die von dem abgekröpften Rohren ausgehende Kraft allemal aus, um den Abstand und zwischen den Lagereinrichtungen 47 und deren Zentrierung bezüglich des Zapfens 57 aufrecht zu erhalten.

Die Lösung nach Fig. 6 kann sowohl bei Führungsschienen 19, 25 verwendet werden, die steif sind, als auch bei solchen, die elastisch sind und nicht in der Lage wären, den korrekten Abstand zwischen den Lagereinrichtungen 47 zu erzwingen.

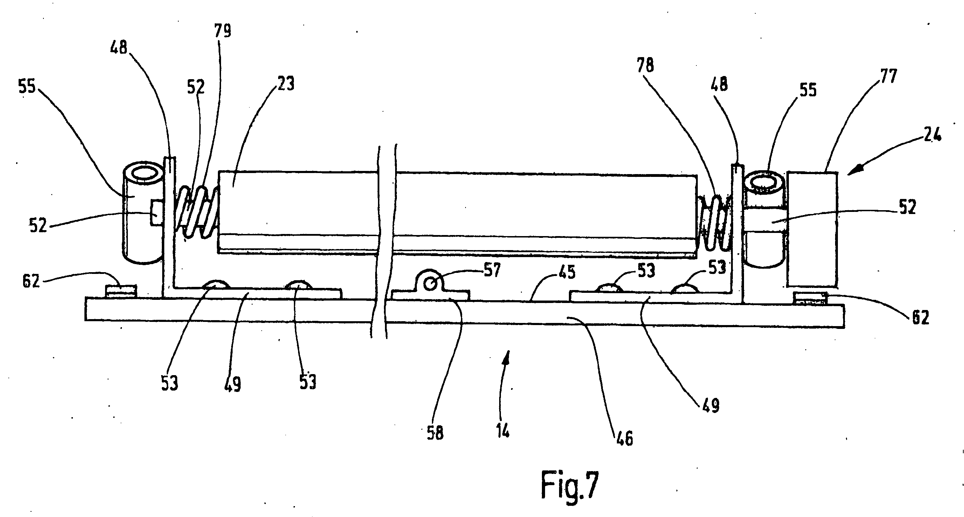

Fig. 7 zeigt in einer Rückansicht auf die Hutablagenhälfte 14, die zum besseren Verständnis unter Vergleich mit den zuvor erläuterten Ausführungsbeispielen so angeordnet ist, dass ihre Unterseite nach oben zeigt, eine Ausführungsform, bei der die Lagereinrichtungen 47 starr und unverrückbar an der Hutablagenhälfte 14 angebracht sind. Die Befestigung der Schenkel 49 geschieht in der gleichen unverrückbaren Weise, wie bei dem Ausführungsbeispiel nach Fig. 3.

Um den unterschiedlichen Temperaturgang zwischen der aus Kunststoff bestehenden Hutablagenhälfte 14 und der aus Stahl bestehenden Wickelwelle 23 zu beherrschen, sind die beiden Lagereinrichtungen 47 mit einem Abstand voneinander angeordnet derart, dass die Schenkel 48 einen größeren Abstand voneinander haben als es der Länge der Wickelwelle 23 entspricht. Dadurch kann die Wickelwelle 23 mit ihren Lagerzapfen 52 zwischen den Schenkeln 48 in Längsrichtung schwimmen.

Der Federmotor 24 ist, abweichend von den vorherigen Ausführungsbeispielen, ausgeführt. Bei den zuvor erläuterten Ausführungsbeispielen befanden sich der Federmotor 24 in Gestalt einer Schraubenzugfeder innerhalb der Wickelwelle 23. Bei dem Ausführungsbeispiel nach Fig. 7 wird der Federmotor von einer Spiralfeder, ähnlich einer Uhrwerksfeder, gebildet, die sich in einem Gehäuse 77 befindet, das an der Hutablagenhälfte 14 befestigt ist. Die Kupplung zwischen dem Lagerzapfen 52, der in dem zugehörigen Schenkel 48 frei drehbar ist, wie der Lagerzapfen 52 auf der anderen Seite, ist drehfest mit der Spiralfeder gekuppelt. Die Kupplung ist aber so ausgeführt, dass die Schwimmbewegung der Wickelwelle 23 durch die Spiralfeder nicht behindert wird.

Um die Zentrierung zu erreichen, sind zwei Schraubendruckfedern 78 und 79 vorgesehen, die zwischen jedem Stirnende der Wickelwelle 23 und dem benachbarten Schenkel 48 der Lagereinrichtung 47 sitzen.

Die mittlere Lage der aus Kunststoff bestehenden Hutablagenhälfte 14 wird, wie zuvor, durch den mittig angeordneten Zentrierzapfen 57 gewährleistet.

Wenn sich bei diesem Ausführungsbeispiel die Länge der Hutablagenhälfte 14 ändert, bewegen sich bei niedrigen Temperaturen die Schenkel 48 auf der Lagereinrichtung 47 aufeinander zu. Bei höherer Temperatur und sich ausdehnender Hutablagenhälfte 14 voneinander weg. Trotz dieser Relativbewegung, die durch den Zentrierzapfen 57 bezüglich der Karosserie vermittelt oder zentriert wird, bleibt die Wickelwelle 23 mittig angeordnet, weil beide gleich stark wirkenden Schraubendruckfedern 78 und 79 die Wickelwelle 23 solange verschieben, bis der Gleichgewichtszustand zwischen den Federn erreicht ist, was der zentrierten Lage zwischen den beiden Lagereinrichtungen 47 entspricht.

Zur Kompensation der temperaturbedingten Relativbewegung der Lagereinrichtungen 47 gegenüber der Karosserie ist es erforderlich Führungsschienen 19, 25 zu verwenden, die zumindest im unteren Abschnitt in der Nähe der Hutablage 12 diese Bewegung aufnehmen zu können. Hierzu können Führungsschienen 19, 25 eingesetzt werden, die im unteren Bereich hinreichend elastisch flexibel sind.

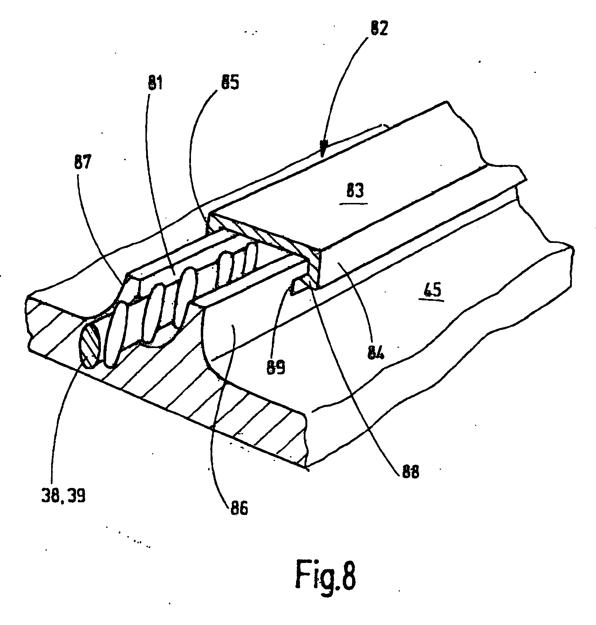

Fig. 8 zeigt eine besondere zusätzliche Strukturierung der Unterseite 45, wie sie bei sämtlichen Ausführungsbeispielen 3 bis 7 angewendet werden kann. An der Unterseite 45 ist eine zusätzliche Nut 81 ausgebildet, die von dem Getriebemotor 36 ausgeht und mit derjenigen Bohrung fluchtet, über die das Leertrum des jeweiligen Schubglieds ausgeht. Die Nut 81 dient als Speicherrohr für das Leertrum des jeweiligen Schubglieds 38, 39. Um ein Ausknicken oder Herausfallen nach unten zu verhindern ist eine zusätzlicher länglicher Deckel 82 vorgesehen, der eine U-förmige Gestalt hat. Mit seinem Rücken 83 verschließt der Deckel 82 die Nut 81, während seine Schenkel 84 und 85 seitlich aufragende Wände 86 und 87 übergreifen, die die Nut 81 begrenzen. An der Innenseite der Schenkel 84 und 85 vorgesehene voneinander beabstandete Haken 88 greifen in entsprechende Öffnungen 89 in den Seitenwänden 86 und 87 ein, um den Deckel 82 zu verrasten.

Die Anordnung nach Fig. 8 erspart das Verlegen separater Speicherrohre. Es versteht sich, dass diese Anordnung nicht anwendbar ist auf das Ausführungsbeispiel nach Fig. 6.

Bei einem Heckfensterrollo wird die hintere Hutablagenhälfte, die sich zwischen dem Auszugsschlitz für das Heckfensterrollo und der Heckscheibe befindet, als tragendes Element verwendet. Die Hutablagenhälfte besteht entweder aus einem Holzwerkstoff oder aus einem Kunststoffformteil. Durch besondere Maßnahmen wird dafür gesorgt, dass der Temperaturgang kompensiert wird.

## Patentansprüche

1. Heckscheibenrollo für Kraftfahrzeuge, die zwischen einer Rücksitzlehne (9) und einem Heckfenster (5) eine vorzugsweise unbeweglich gehalterte Hutablage (12) aufweisen, die durch einen Auszugsschlitz (13), der sich über die gesamte Länge der Hutablage (12) erstreckt in einen vorderen und einen hinteren der Heckfenster (5) benachbarten Bereich (14,15) aufgeteilt ist, **dadurch gekennzeichnet, dass** das Heckscheibenrollo versehen ist
mit einem Trägerelement (14), das von dem hinteren Hutablagenbereich (14) gebildet ist und das aus einem nichtmetallischen Material mit einem Temperaturgang besteht, der sich um weniger als 30% von dem Temperaturgang von Stahl unterscheidet,
mit zwei Lagereinrichtungen (47), die an dem Trägerelement (14) unbeweglich befestigt sind,
mit einer Wickelwelle (23), die endseits mittels der Lagereinrichtungen (47) mit dem Trägerelement (14) verbunden ist,
mit einer Rollobahn (22), die an der Wickelwelle (23) mit einer Kante befestigt ist und deren andere von der Wickelwelle (23) abliegende Kante mit einem Zugstab (21) verbunden ist, der endseitig Gleiter (30) trägt,
mit zwei Führungsschienen (19,25), die in dem Kraftfahrzeug befestigt sind, die bei der Hutablage (12) beginnen, in denen die Gleiter (30) des Zugstabs (21) laufen und in denen linienförmige Schubglieder (38,39) ausknicksicher geführt sind,
mit einem Federmotor (24), der der Wickelwelle (23) zugeordnet ist um die Rollobahn (22) im Sinne des Aufwickelns auf die Wickelwelle (23) vorzuspannen,
mit einem Getriebemotor (36), der an dem Trägerelement (14) befestigt ist und der dazu eingerichtet ist die beiden linienförmigen Schubglieder (38,39) synchron in entgegengesetzte Richtungen in Bewegung zu setzen.

2. Heckscheibenrollo nach Anspruch 1, **dadurch gekennzeichnet, dass** das Material ein Holzwerkstoff ist, der sich vorzugsweise aus Holzfasern oder Holzspänen zusammensetzt, die durch ein Bindemittel miteinander verbunden sind.

3. Heckscheibenrollo nach Anspruch 1, **dadurch gekennzeichnet, dass** das Trägerelement (14) ein Pressformteil ist.

4. Heckscheibenrollo nach Anspruch 2, **dadurch gekennzeichnet, dass** das Bindemittel Lignin oder ein Kunstharz ist.

5. Heckscheibenrollo nach Anspruch 1, **dadurch gekennzeichnet, dass** jede Lagereinrichtung (47) mit einem rohrförmigen Kupplungsstück (55) versehen ist, das zur Verbindung mit der jeweiligen Führungsschiene (19,25) eingerichtet ist und in dem der jeweilige Gleiter (30) geführt ist.

6. Heckscheibenrollo nach Anspruch 1, **dadurch gekennzeichnet, dass** jede Führungsschiene (19,25) für sich in der Fahrzeugkarosserie befestigt ist.

7. Heckscheibenrollo nach Anspruch 1, **dadurch gekennzeichnet, dass** die Führungsschiene (19,25) ein Kunststoffformteil ist.

8. Heckscheibenrollo nach Anspruch 1, **dadurch gekennzeichnet, dass** die Führungsschiene (19,25) ein Aluminiumstrangpressformteil ist.

9. Heckscheibenrollo nach Anspruch 1, **dadurch gekennzeichnet, dass** sich für jedes Schubglied (38,39) zwischen dem Getriebemotor (36) und dem Kupplungsstück (55) oder der Führungsschiene (19,25) ein Führungsrohr (31,32) erstreckt, das vorzugsweise zumindest abschnittsweise biegeelastisch ist.

10. Heckscheibenrollo nach Anspruch 1, **dadurch gekennzeichnet, dass** von dem Getriebemotor (36) für jedes Schubglied (38,39) ein Speicherrohr (40,41) ausgeht.

11. Heckscheibenrollo für Kraftfahrzeuge, die zwischen einer Rücksitzlehne (9) und einem Heckfenster (5) eine vorzugsweise unbeweglich gehalterte Hutablage (12) aufweisen, die durch einen Auszugsschlitz (13), der sich über die gesamte Länge der Hutablage (12) erstreckt in einen vorderen und einen hinteren dem Heckfenster (5) benachbarten Bereich (14,15) aufgeteilt ist, **dadurch gekennzeichnet, dass** das Heckscheibenrollo versehen ist
mit einem Trägerelement (14), das von dem hinteren Hutablagenbereich (14) gebildet ist, der aus einem Kunststoff besteht, der gegenüber Stahl einen größeren Temperaturgang aufweist,
mit zwei Lagereinrichtungen (47), die an dem Trägerelement (14) verschieblich befestigt sind,
mit Abstandhaltemitteln (61;40,41), die dazu eingerichtet sind den Abstand zwischen den Lagereinrichtungen (47) unabhängig von der Temperaturgangdifferenz zwischen der Karosserie und dem Trägerelement (14) festzuhalten,
mit einer Wickelwelle (23), die endseits mittels der Lagereinrichtungen (47) mit dem Trägerelement (14) verbunden ist,
mit einer Rollobahn (22), die an der Wickelwelle (23) mit einer Kante befestigt ist und deren andere von der Wickelwelle (23) abliegende Kante mit einem Zugstab (21) verbunden ist, der endseitig Gleiter (30) trägt,
mit zwei Führungsschienen (19,25), die in dem Kraftfahrzeug befestigt sind, die bei der Hutablage (12) beginnen, in denen die Gleiter (30) des Zugstabs (21) laufen und in denen linienförmige Schubglieder (38,39) ausknicksicher geführt sind,
mit einem Federmotor (24), der der Wickelwelle (23) zugeordnet ist um die Rollobahn (22) im Sinne des Aufwickelns auf die Wickelwelle (23) vorzuspannen,
mit einem Getriebemotor (36), der an dem Trägerelement (14) befestigt ist und der dazu eingerichtet ist die beiden linienförmigen Schubglieder (38,39) synchron in entgegengesetzte Richtungen in Bewegung zu setzen.

12. Heckscheibenrollo nach Anspruch 11, **dadurch gekennzeichnet, dass** jede Lagereinrichtung (47) mit einem rohrförmigen Kupplungsstück (55) versehen ist, das zur Verbindung mit der jeweiligen Führungsschiene (19,25) eingerichtet ist und in dem der jeweilige Gleiter (30) geführt ist.

13. Heckscheibenrollo nach Anspruch 11, **dadurch gekennzeichnet, dass** jede Führungsschiene (19,25) für sich in der Fahrzeugkarosserie befestigt ist.

14. Heckscheibenrollo nach Anspruch 11, **dadurch gekennzeichnet, dass** die Führungsschiene (19,25) ein Kunststoffformteil ist.

15. Heckscheibenrollo nach Anspruch 11, **dadurch gekennzeichnet, dass** die Führungsschiene (19,25) ein Aluminiumstrangpressformteil ist.

16. Heckscheibenrollo nach Anspruch 11, **dadurch gekennzeichnet, dass** sich für jedes Schubglied (38,39) zwischen dem Getriebemotor (36) und dem Kupplungsstück (55) oder der Führungsschiene (19,25) ein Führungsrohr (31,32) erstreckt, das vorzugsweise zumindest an einem Ende biegeelastisch ist.

17. Heckscheibenrollo nach Anspruch 11, **dadurch gekennzeichnet, dass** von dem Getriebemotor (36) für jedes Schubglied (38,39) ein Speicherrohr (40,41) ausgeht.

18. Heckscheibenrollo nach Anspruch 17, **dadurch gekennzeichnet, dass** das Speicherrohr (40,41) in sich knicksteif ist.

19. Heckscheibenrollo nach Anspruch 17, **dadurch gekennzeichnet, dass** das Speicherrohr (40,41) aus Metall besteht.

20. Heckscheibenrollo nach Anspruch 16 oder 17, **dadurch gekennzeichnet, dass** das Speicherrohr (40,41) oder das Führungsrohr (31,32) an seinem von dem Getriebemotor (36) abliegenden Ende starr mit der benachbarten Lagereinrichtung (47) verbunden ist, derart, dass die beiden Speicherrohre (40,41) oder die beiden Führungsrohre (31,32) zusammen das Abstandshaltemittel bilden.

21. Heckscheibenrollo nach Anspruch 11, **dadurch gekennzeichnet, dass** das Abstandshaltemittel von der Fahrzeugkarosserie (61) gebildet ist.

22. Heckscheibenrollo nach Anspruch 11, **dadurch gekennzeichnet, dass** die zum Verschieben der Lagereinrichtung (47) erforderliche Kraft über miteinander in Eingriff stehende Verbindungsmittel (19,25,55;69,71) an der Lagereinrichtung (47) und der Karosserie (61) übertragen wird.

23. Heckscheibenrollo nach Anspruch 22, **dadurch gekennzeichnet, dass** das Verbindungsmittel an der Lagereinrichtung (47) von der Kupplungseinrichtung (55) für die Führungsschiene (19,25) gebildet wird.

24. Heckscheibenrollo nach Anspruch 22, **dadurch gekennzeichnet, dass** das Verbindungsmittel an der Lagereinrichtung (47) durch einen Zapfen (69) oder eine Öse gebildet ist.

25. Heckscheibenrollo nach Anspruch 22, **dadurch gekennzeichnet, dass** das Verbindungsmittel an der Karosserie (61) durch einen Zapfen oder eine Öse (71) gebildet ist.

26. Heckscheibenrollo nach Anspruch 11, **dadurch gekennzeichnet, dass** das Trägerelement (14) bezogen auf seine Längserstreckung und damit auf der Höhe der Mitte der Wickelwelle (23) ein Zentriermittel (57) aufweist, das mit einem Zentriermittel (59) an der Karosserie (61) zusammenwirkt.

27. Heckscheibenrollo nach Anspruch 11, **dadurch gekennzeichnet, dass** der Getriebemotor (36) mittig, bezogen auf die Längserstreckung des Trägerelements (14) und damit auf der Höhe der Mitte der Wickelwelle (23), an dem Trägerelement (14) befestigt ist.

28. Heckscheibenrollo nach Anspruch 11, **dadurch gekennzeichnet, dass** das Trägerelement (14) auf seiner Unterseite (45) Rippen (66) aufweist, die sechseckige Zellen ähnlich einer Bienenwabe bilden.

29. Heckscheibenrollo nach Anspruch 11, **dadurch gekennzeichnet, dass** das Trägerelement (14) auf seiner Unterseite (45) wenigstens eine Nut (81) zur Aufnahme eines Schubglieds (38,39) aufweist.

30. Heckscheibenrollo für Kraftfahrzeuge, die zwischen einer Rücksitzlehne (9) und einem Heckfenster (5) eine vorzugsweise unbeweglich gehalterte Hutablage (12) aufweisen, die durch einen Auszugsschlitz (13), der sich über die gesamte Länge der Hutablage (12) erstreckt in einen vorderen und einen hinteren dem Heckfenster (5) benachbarten Bereich (14,15) aufgeteilt ist, **dadurch gekennzeichnet, dass** das Heckscheibenrollo versehen ist
mit einem Trägerelement (14), das von dem hinteren Hutablagenbereich (14) gebildet ist, der aus einem Kunststoff besteht, der gegenüber Stahl einen größeren Temperaturgang aufweist,
mit zwei Lagereinrichtungen (47), die an dem Trägerelement (14) starr befestigt sind,
mit einer Wickelwelle (23), die endseits mittels der Lagereinrichtungen (47) mit dem Trägerelement (14) verbunden ist,
mit einer Rollobahn (22), die an der Wickelwelle (23) mit einer Kante befestigt ist und deren andere von der Wickelwelle (23) abliegende Kante mit einem Zugstab (21) verbunden ist, der endseitig Gleiter (30) trägt,
mit elastischen Ausgleichsmitteln (78,79), die dazu eingerichtet sind, die Wickelwelle (23) zwischen den Lagereinrichtungen (47) zu zentrieren,
mit zwei Führungsschienen (19,25), die in dem Kraftfahrzeug befestigt sind, die bei der Hutablage (12) beginnen, in denen die Gleiter (30) des Zugstabs (21) laufen und in denen linienförmige Schubglieder (38,39) ausknicksicher geführt sind,
mit einem Federmotor (24), der der Wickelwelle (23) zugeordnet ist um die Rollobahn (22) im Sinne des Aufwickelns auf die Wickelwelle (23) vorzuspannen,
mit einem Getriebemotor (36), der an dem Trägerelement (14) befestigt ist und der dazu eingerichtet ist die beiden linienförmigen Schubglieder (38,39) synchron in entgegengesetzte Richtungen in Bewegung zu setzen.

31. Heckscheibenrollo nach Anspruch 30, **dadurch gekennzeichnet, dass** jede Lagereinrichtung (47) mit einem rohrförmigen Kupplungsstück (55) versehen ist, das zur Verbindung mit der jeweiligen Führungsschiene (19,25) eingerichtet ist und in dem der jeweilige Gleiter (30) geführt ist.

32. Heckscheibenrollo nach Anspruch 30, **dadurch gekennzeichnet, dass** jede Führungsschiene (19,25) für sich in der Fahrzeugkarosserie befestigt ist.

33. Heckscheibenrollo nach Anspruch 30, **dadurch gekennzeichnet, dass** die Führungsschiene (19,25) ein Kunststoffformteil ist.

34. Heckscheibenrollo nach Anspruch 30, **dadurch gekennzeichnet, dass** die Führungsschiene (19,25) ein Aluminiumstrangpressformteil ist.

35. Heckscheibenrollo nach Anspruch 30, **dadurch gekennzeichnet, dass** jede Führungsschiene (19,25) einen Abschnitt bildet, der der Lagereinrichtung benachbart ist und der in einer Ebene begrenzt beweglich ist, die den betreffenden Abschnitt der Führungsschiene (19,25) und die Achse der Wickelwelle (23) enthält.

36. Heckscheibenrollo nach Anspruch 30, **dadurch gekennzeichnet, dass** sich für jedes Schubglied (38,39) zwischen dem Getriebemotor (36) und dem Kupplungsstück (55) oder der Führungsschiene (19,25) ein Führungsrohr (31,32) erstreckt, das zumindest abschnittsweise biegeelastisch ist.

37. Heckscheibenrollo nach Anspruch 30, **dadurch gekennzeichnet, dass** von dem Getriebemotor (36) für jedes Schubglied (38,39) ein Speicherrohr (40,41) ausgeht.

38. Heckscheibenrollo nach Anspruch 30, **dadurch gekennzeichnet, dass** das Trägerelement (14) bezogen auf seine Längserstreckung und damit auf der Höhe der Mitte der Wickelwelle (23) ein Zentriermittel (57) aufweist, das mit einem Zentriermittel (59) an der Karosserie (61) zusammenwirkt.

39. Heckscheibenrollo nach Anspruch 30, **dadurch gekennzeichnet, dass** der Getriebemotor (36) mittig bezogen auf die Längserstreckung des Trägerelements (14) und damit auf der Höhe der Mitte der Wickelwelle (23), an dem Trägerelement (14) befestigt ist.

40. Heckscheibenrollo nach Anspruch 30, **dadurch gekennzeichnet, dass** die Kupplung zwischen dem Federmotor (24) und der Wickelwelle (23) derart ausgeführt ist, dass zwischen der Wickelwelle (23) und dem Federmotor (24) lediglich eine Torsionskraft übertragbar ist.

41. Heckscheibenrollo nach Anspruch 30, **dadurch gekennzeichnet, dass** das elastische Ausgleichsmittel (78,79) zwei Federn umfasst, jede zwischen einem Ende der Wickelwelle (23) und der zugehörigen Lagereinrichtung (47) eingefügt ist.

42. Heckscheibenrollo nach Anspruch 41, **dadurch gekennzeichnet, dass** die Feder (78,79) von einer Schraubendruckfeder gebildet ist.

43. Heckscheibenrollo nach Anspruch 30, **dadurch gekennzeichnet, dass** das Trägerelement (14) auf seiner Unterseite (45) Rippen (66) aufweist, die sechseckige Zellen ähnlich einer Bienenwabe bilden.

44. Heckscheibenrollo nach Anspruch 30, **dadurch gekennzeichnet, dass** das Trägerelement (14) auf seiner Unterseite wenigstens eine Nut (81) zur Bildung eines Speicherrohrs aufweist.

## Claims

1. Rear window roller blind for motor vehicles, which have a preferably immovably mounted parcel shelf (12) between a rear seat back (9) and a rear window (5), said parcel shelf being divided into a front and a rear region (14, 15) adjacent to the rear window (5) by a pull-out slot (13), which extends over the entire length of the parcel shelf (12), **characterised in that** the rear window roller blind is provided
with a support element (14), which is formed by the rear parcel shelf region (14) and which is made from a non-metallic material with a temperature response, which differs from the temperature response of steel by less than 30%,
with two bearing devices (47), which are immovably fastened to the support element (14),
with a winding shaft (23), which is connected at the ends to the support element (14) by means of the bearing devices (47),
with a blind sheet (22), which is fastened to the winding shaft (23) at one edge and its other edge remote from the winding shaft (23) is connected to a pull rod (21), which bears sliders (30) at the ends,
with two guide rails (19, 25), which are fastened in the motor vehicle, which start at the parcel shelf (12), in which rails the sliders (30) of the pull rod (21) run and in which linear pushing members (38, 39) are guided to be secure against buckling,
with a spring motor (24), which is associated with the winding shaft (23) to bias the blind sheet (22) in the direction of winding it onto the winding shaft (23),
with a geared motor (36), which is fastened to the support element (14) and which is arranged to set the two linear pushing members (38, 39) synchronously in motion in opposite directions.

2. Rear window roller blind according to claim 1, **characterised in that** the material is a wood material, which is preferably composed of wood fibres or wood chips, which are bonded to one another by a binding agent.

3. Rear window roller blind according to claim 1, **characterised in that** the support element (14) is a press moulded part.

4. Rear window roller blind according to claim 2, **characterised in that** the binding agent is lignin or a synthetic resin.

5. Rear window roller blind according to claim 1, **characterised in that** each bearing device (47) is provided with a tubular coupling piece (55), which is arranged to connect to the respective guide rail (19, 25) and in which the respective slider (30) is guided.

6. Rear window roller blind according to claim 1, **characterised in that** each guide rail (19, 25) is fastened in the vehicle body individually.

7. Rear window roller blind according to claim 1, **characterised in that** the guide rail (19, 25) is a plastic moulded part.

8. Rear window roller blind according to claim 1, **characterised in that** the guide rail (19, 25) is an aluminium extruded part.

9. Rear window roller blind according to claim 1, **characterised in that** for each pushing member (38, 39) a guide tube (31, 32), which is preferably pliant at least in sections, extends between the geared motor (36) and the coupling piece (55) or the guide rail (19, 25).

10. Rear window roller blind according to claim 1, **characterised in that** a storage tube (40, 41) extends from the geared motor (36) for each pushing member (38, 39).

11. Rear window roller blind for motor vehicles, which have a preferably immovably mounted parcel shelf (12) between a rear seat back (9) and a rear window (5), said parcel shelf being divided into a front and a rear region (14, 15) adjacent to the rear window (5) by a pull-out slot (13), which extends over the entire length of the parcel shelf (12), **characterised in that** the rear window roller blind is provided
with a support element (14), which is formed by the rear parcel shelf region (14) and which is made from a plastic with a higher temperature response than steel,
with two bearing devices (47), which are displaceably fastened to the support element (14),
with spacer elements (61; 40, 41), which are arranged to fix the spacing between the bearing devices (47) irrespective of the difference in temperature response between the vehicle body and the support element (14),
with a winding shaft (23), which is connected at the ends to the support element (14) by means of the bearing devices (47),
with a blind sheet (22), which is fastened to the winding shaft (23) at one edge and its other edge remote from the winding shaft (23) is connected to a pull rod (21), which bears sliders (30) at the ends,
with two guide rails (19, 25), which are fastened in the motor vehicle, which start at the parcel shelf (12), in which rails the sliders (30) of the pull rod (21) run, and in which linear pushing members (38, 39) are guided to be secure against buckling,
with a spring motor (24), which is associated with the winding shaft (23) to bias the blind sheet (22) in the direction of winding it onto the winding shaft (23),
with a geared motor (36), which is fastened to the support element (14) and which is arranged to set the two linear pushing members (38, 39) synchronously in motion in opposite directions.

12. Rear window roller blind according to claim 11, **characterised in that** each bearing device (47) is provided with a tubular coupling piece (55), which is arranged to connect to the respective guide rail (19, 25) and in which the respective slider (30) is guided.

13. Rear window roller blind according to claim 11, **characterised in that** each guide rail (19, 25) is fastened in the vehicle body individually.

14. Rear window roller blind according to claim 11, **characterised in that** the guide rail (19, 25) is a plastic moulded part.

15. Rear window roller blind according to claim 11, **characterised in that** the guide rail (19, 25) is an aluminium extruded part.

16. Rear window roller blind according to claim 11, **characterised in that** for each pushing member (38, 39) a guide tube (31, 32), which is preferably pliant at least in sections, extends between the geared motor (36) and the coupling piece (55) or the guide rail (19, 25).

17. Rear window roller blind according to claim 11, **characterised in that** a storage tube (40, 41) extends from the geared motor (36) for each pushing member (38,39).

18. Rear window roller blind according to claim 17, **characterised in that** the storage tube (40, 41) is intrinsically resistant to bending.

19. Rear window roller blind according to claim 17, **characterised in that** the storage tube (40,41) is made from metal.

20. Rear window roller blind according to claim 16 or 17, **characterised in that** the storage tube (40, 41) or the guide tube (21, 32) is rigidly connected at its end remote from the geared motor (36) to the adjacent bearing device (47) in such a manner that the two storage tubes (40, 41) or the two guide tubes (31, 32) together form the spacer element.

21. Rear window roller blind according to claim 11, **characterised in that** the spacer element is formed by the vehicle body (61).

22. Rear window roller blind according to claim 11, **characterised in that** the force required to displace the bearing device (47) is transmitted by means of intermeshing connecting elements (19, 25, 55; 69, 71) on the bearing device (47) and the vehicle body (61).

23. Rear window roller blind according to claim 22, **characterised in that** the connecting element on the bearing device (47) is formed by the coupling device (55) for the guide rail (19, 25).

24. Rear window roller blind according to claim 22, **characterised in that** the connecting element on the bearing device (47) is formed by a lug (69) or an eyelet.

25. Rear window roller blind according to claim 22, **characterised in that** the connecting element on the vehicle body (61) is formed by a lug or an cyclet (71).

26. Rear window roller blind according to claim 11, **characterised in that** in relation to its longitudinal extent and thus to the height of the centre of the winding shaft (23), the support element (14) has a centring element (57), which cooperates with a centring element (59) on the vehicle body (61).

27. Rear window roller blind according to claim 11, **characterised in that** the geared motor (36) is fastened on the support element (14) centrally in relation to the longitudinal extent of the support element (14) and thus to the height of the centre of the winding shaft (23).

28. Rear window roller blind according to claim 11, **characterised in that** on its underside (45) the support element (14) has ribs, which form hexagonal cells similar to a beehive.

29. Rear window roller blind according to claim 11, **characterised in that** the support element (14) has at least one groove (81) on its underside (45) to receive a pushing member (38, 39).

30. Rear window roller blind for motor vehicles, which have a preferably immovably mounted parcel shelf (12) between a rear seat back (9) and a rear window (5), said parcel shelf being divided into a front and a rear region (14, 15) adjacent to the rear window (5) by a pull-out slot (13), which extends over the entire length of the parcel shelf (12), **characterised in that** the rear window roller blind is provided
with a support element (14), which is formed by the rear parcel shelf region (14) and which is made from a plastic with a higher temperature response than steel,
with two bearing devices (47), which are rigidly fastened to the support element (14),
with a winding shaft (23), which is connected at the ends to the support element (14) by means of the bearing devices (47),
with a blind sheet (22), which is fastened to the winding shaft (23) at one edge and its other edge remote from the winding shaft (23) is connected to a pull rod (21), which bears sliders (30) at the ends,
with elastic equalising elements (78, 79), which are arranged to centre the winding shaft (23) between the bearing devices (47),
with two guide rails (19, 25), which are fastened in the motor vehicle, which start at the parcel shelf (12), in which rails the sliders (30) of the pull rod (21) run and in which linear pushing members (38, 39) are guided to be secure against buckling,
with a spring motor (24), which is associated with the winding shaft (23) to bias the blind sheet (22) in the direction of winding it onto the winding shaft (23),
with a geared motor (36), which is fastened to the support element (14) and which is arranged to set the two linear pushing members (38, 39) synchronously in motion in opposite directions.

31. Rear window roller blind according to claim 30, **characterised in that** each bearing device (47) is provided with a tubular coupling piece (55), which is arranged to connect to the respective guide rail (19, 25) and in which the respective slider (30) is guided.

32. Rear window roller blind according to claim 30, **characterised in that** each guide rail (19, 25) is fastened in the vehicle body individually.

33. Rear window roller blind according to claim 30, **characterised in that** the guide rail (19, 25) is a plastic moulded part.

34. Rear window roller blind according to claim 30, **characterised in that** the guide rail (19, 25) is an aluminium extruded part.

35. Rear window roller blind according to claim 30, **characterised in that** each guide rail (19, 25) forms a section, which is adjacent to the bearing device and which is restrictedly movable in a plane, which contains the respective section of the guide rail (19, 25) and the axis of the winding shaft (23).

36. Rear window roller blind according to claim 30, **characterised in that** for each pushing member (38, 39) a guide tube (31, 32), which is preferably pliant at least in sections, extends between the geared motor (36) and the coupling piece (55) or the guide rail (19, 25).

37. Rear window roller blind according to claim 30, **characterised in that** a storage tube (40, 41) extends from the geared motor (36) for each pushing member (38, 39).

38. Rear window roller blind according to claim 30, **characterised in that** in relation to its longitudinal extent and thus to the height of the centre of the winding shaft (23) the support element (14) has a centring element (57), which cooperates with a centring element (59) on the vehicle body (61).

39. Rear window roller blind according to claim 30, **characterised in that** the geared motor (36) is fastened on the support element (14) centrally in relation to the longitudinal extent of the support element (14) and thus to the height of the centre of the winding shaft (23).

40. Rear window roller blind according to claim 30, **characterised in that** the coupling between the spring motor (24) and the winding shaft (23) is configured such that only a torsional force is transferable between the winding shaft (23) and the spring motor (24).

41. Rear window roller blind according to claim 30, **characterised in that** the elastic equalising element (78, 79) comprises two springs, each being inserted between an end of the winding shaft (23) and the associated bearing device (47).

42. Rear window roller blind according to claim 41, **characterised in that** the spring (78, 79) is formed by a coil compression spring.

43. Rear window roller blind according to claim 30, **characterised in that** on its underside (45) the support element (14) has ribs (66), which form hexagonal cells similar to a beehive.

44. Rear window roller blind according to claim 30, **characterised in that** the support element (14) has at least one groove (81) on its underside (45) to form a storage tube.

## Revendications

1. Store à enrouleur pour lunette arrière destiné à des véhicules automobiles présentant une plage arrière (12) qui est montée, de préférence de manière fixe, entre un dossier de siège arrière (9) et une lunette arrière (5) et qui est divisée en une partie avant et une partie arrière (14, 15), voisine de la lunette arrière (5), par une fente de sortie (13) qui s'étend sur toute la longueur de la plage arrière (12). **caractérisé en ce que** le store à enrouleur pour lunette arrière est doté
d'un élément support (14) qui est formé par la partie arrière de plage arrière (14) et qui est constitué d'un matériau non métallique avec une sensibilité aux variations de température qui se distingue de moins de 30% de la sensibilité aux variations de température de l'acier,
de deux dispositifs de montage (47) qui sont fixés de manière stationnaire à l'élément support (14),
d'un axe d'enroulement (23) qui est lié par ses extrémités à l'élément support (14), au moyen des dispositifs de montage (47),
d'une bande de store (22) qui est fixée par un bord à l'axe d'enroulement (23) et dont l'autre bord, qui est éloigné de l'axe d'enroulement (23), est relié à une barre de traction (21) qui porte des coulisseaux (30) à ses extrémités,
de deux glissières (19, 25) qui sont fixées dans le véhicule automobile et commencent sur la plage arrière (12) et dans lesquelles se déplacent les coulisseaux (30) de la barre de traction (21) et dans lesquelles des éléments de poussée (38, 39) linéaires sont guidés de façon à résister au flambage,
d'un moteur à ressort (24) qui est associé à l'axe d'enroulement (23) pour mettre la bande de store (22) sous précontrainte dans le sens de l'enroulement sur l'axe d'enroulement (23),
d'un motoréducteur (36) qui est fixé à l'élément support (14) et qui est agencé pour mettre les deux éléments de poussée (38, 39) linéaires en mouvement, de façon synchrone et dans des sens opposés.

2. Store à enrouleur pour lunette arrière selon la revendication 1, **caractérisé en ce que** le matériau est un matériau à base de bois qui se compose de préférence de fibres de bois ou de copeaux de bois liés entre eux par un liant.

3. Store à enrouleur pour lunette arrière selon la revendication 1, **caractérisé en ce que** l'élément support (14) est une pièce moulée par pression.

4. Store à enrouleur pour lunette arrière selon la revendication 2, **caractérisé en ce que** le liant est de la lignine ou une résine synthétique.

5. Store à enrouleur pour lunette arrière selon la revendication 1, **caractérisé en ce que** chaque dispositif de montage (47) est pourvu d'une pièce d'accouplement (55) tubulaire qui est conçue pour être reliée à la glissière (19, 25) respective et dans laquelle est guidé le coulisseau (30) respectif.

6. Store à enrouleur pour lunette arrière selon la revendication 1, **caractérisé en ce que** chaque glissière (19, 25) est fixée séparément dans la carrosserie du véhicule.

7. Store à enrouleur pour lunette arrière selon la revendication 1, **caractérisé en ce que** la glissière (19, 25) est une pièce moulée en matière plastique.

8. Store à enrouleur pour lunette arrière selon la revendication 1, **caractérisé en ce que** la glissière (19, 25) est une pièce en aluminium extrudé.

9. Store à enrouleur pour lunette arrière selon la revendication 1, **caractérisé en ce que** pour chaque élément de poussée (38, 39), un tube de guidage (31, 32) s'étend entre le motoréducteur (36) et la pièce d'accouplement (55) ou la glissière (19, 25), lequel tube est de préférence élastique en flexion au moins par portions.

10. Store à enrouleur pour lunette arrière selon la revendication 1, **caractérisé en ce qu'**un tube logement (40, 41) pour chaque élément de poussée (38, 39) part du motoréducteur (36).

11. Store à enrouleur pour lunette arrière destiné à des véhicules automobiles présentant une plage arrière (12) qui est montée, de préférence de manière fixe, entre un dossier de siège arrière (9) et une lunette arrière (5) et qui est divisée en une partie avant et une partie arrière (14, 15), voisine de la lunette arrière (5), par une fente de sortie (13) qui s'étend sur toute la longueur de la plage arrière (12), **caractérisé en ce que** le store à enrouleur pour lunette arrière est doté
d'un élément support (14) qui est formé par la partie arrière de plage arrière (14) qui est constituée d'une matière plastique présentant une sensibilité aux variations de température supérieure à celle de l'acier,
de deux dispositifs de montage (47) qui sont fixés avec possibilité de déplacement à l'élément support (14),
de moyens d'écartement (61; 40, 41) qui sont conçus pour maintenir l'espacement entre les dispositifs de montage (47), indépendamment de la différence de sensibilité aux variations de température entre la carrosserie et l'élément support (14),
d'un axe d'enroulement (23) qui est lié par ses extrémités à l'élément support (14), au moyen des dispositifs de montage (47),
d'une bande de store (22) qui est fixée par un bord à l'axe d'enroulement (23) et dont l'autre bord, qui est éloigné de l'axe d'enroulement (23), est relié à une barre de traction (21) qui porte des coulisseaux (30) à ses extrémités,
de deux glissières (19, 25) qui sont fixées dans le véhicule automobile et commencent sur la plage arrière (12) et dans lesquelles se déplacent les coulisseaux (30) de la barre de traction (21) et dans lesquelles des éléments de poussée (38, 39) linéaires sont guidés de façon à résister au flambage,
d'un moteur à ressort (24) qui est associé à l'axe d'enroulement (23) pour mettre la bande de store (22) sous précontrainte dans le sens de l'enroulement sur l'axe d'enroulement (23),
d'un motoréducteur (36) qui est fixé à l'élément support (14) et qui est agencé pour mettre les deux éléments de poussée (38, 39) linéaires en mouvement, de façon synchrone et dans des sens opposés.

12. Store à enrouleur pour lunette arrière selon la revendication 11, **caractérisé en ce que** chaque dispositif de montage (47) est pourvu d'une pièce d'accouplement (55) tubulaire qui est conçue pour être reliée à la glissière (19, 25) respective et dans laquelle est guidé le coulisseau (30) respectif.

13. Store à enrouleur pour lunette arrière selon la revendication 11, **caractérisé en ce que** chaque glissière (19, 25) est fixée séparément dans la carrosserie du véhicule.

14. Store à enrouleur pour lunette arrière selon la revendication 11, **caractérisé en ce que** la glissière (19, 25) est une pièce moulée en matière plastique.

15. Store à enrouleur pour lunette arrière selon la revendication 11, **caractérisé en ce que** la glissière (19, 25) est une pièce en aluminium extrudé.

16. Store à enrouleur pour lunette arrière selon la revendication 11, **caractérisé en ce que** pour chaque élément de poussée (38, 39), un tube de guidage (31, 32) s'étend entre le motoréducteur (36) et la pièce d'accouplement (55) ou la glissière (19, 25), lequel tube est de préférence élastique en flexion au moins à une extrémité.

17. Store à enrouleur pour lunette arrière selon la revendication 11, **caractérisé en ce qu'**un tube logement (40, 41) pour chaque élément de poussée (38, 39) part du motoréducteur (36).

18. Store à enrouleur pour lunette arrière selon la revendication 17, **caractérisé en ce que** le tube logement (40, 41) est en soi résistant au flambage.

19. Store à enrouleur pour lunette arrière selon la revendication 17, **caractérisé en ce que** le tube logement (40, 41) est en métal.

20. Store à enrouleur pour lunette arrière selon la revendication 16 ou 17, **caractérisé en ce que** le tube logement (40, 41) ou le tube de guidage (31, 32), à son extrémité éloignée du motoréducteur (36), est relié de façon rigide au dispositif de montage (47) voisin, de telle sorte que les deux tubes logements (40, 41) ou les deux tubes de guidage (31, 32) forment ensemble le moyen d'espacement.

21. Store à enrouleur pour lunette arrière selon la revendication 11, **caractérisé en ce que** le moyen d'espacement est formé par la carrosserie du véhicule (61).

22. Store à enrouleur pour lunette arrière selon la revendication 11, **caractérisé en ce que** la force nécessaire au déplacement du dispositif de montage (47) est transmise par des moyens de liaison (19, 25, 55; 69, 71) qui sont en prise les uns avec les autres et se trouvent sur le dispositif de montage (47) et la carrosserie (61).

23. Store à enrouleur pour lunette arrière selon la revendication 22, **caractérisé en ce que** le moyen de liaison sur le dispositif de montage (47) est constitué du dispositif d'accouplement (55) pour la glissière (19, 25).

24. Store à enrouleur pour lunette arrière selon la revendication 22, **caractérisé en ce que** le moyen de liaison sur le dispositif de montage (47) est constitué d'une patte (69) ou d'un oeillet.

25. Store à enrouleur pour lunette arrière selon la revendication 22, **caractérisé en ce que** le moyen de liaison sur la carrosserie (61) est constitué d'une patte ou d'un oeillet (71).

26. Store à enrouleur pour lunette arrière selon la revendication 11, **caractérisé en ce que** l'élément support (14), rapporté à sa dimension en longueur, et donc au niveau du milieu de l'axe d'enroulement (23), présente un moyen de centrage (57) qui coopère avec un moyen de centrage (59) sur la carrosserie (61).

27. Store à enrouleur pour lunette arrière selon la revendication 11, **caractérisé en ce que** le motoréducteur (36) est fixé à l'élément support (14) au milieu, rapporté à la dimension en longueur de l'élément support (14), et donc au niveau du milieu de l'axe d'enroulement (23).

28. Store à enrouleur pour lunette arrière selon la revendication 11, **caractérisé en ce que** l'élément support (14) présente sur sa face inférieure (45) des nervures (66) qui forment des cellules hexagonales, semblables à une structure alvéolaire.

29. Store à enrouleur pour lunette arrière selon la revendication 11, **caractérisé en ce que** l'élément support (14) présente sur sa face inférieure (45) au moins une rainure (81) destinée à recevoir un élément de poussée (38, 39).

30. Store à enrouleur pour lunette arrière destiné à des véhicules automobiles présentant une plage arrière (12) qui est montée, de préférence de manière fixe, entre un dossier de siège arrière (9) et une lunette arrière (5) et qui est divisée en une partie avant et une partie arrière (14, 15), voisine de la lunette arrière (5), par une fente de sortie (13) qui s'étend sur toute la longueur de la plage arrière (12), **caractérisé en ce que** le store à enrouleur pour lunette arrière est doté
d'un élément support (14) qui est formé par la partie arrière de plage arrière (14) qui est constituée d'une matière plastique présentant une sensibilité aux variations de température supérieure à celle de l'acier,
de deux dispositifs de montage (47) qui sont fixés de manière rigide à l'élément support (14),
d'un axe d'enroulement (23) qui est lié par ses extrémités à l'élément support (14), au moyen des dispositifs de montage (47),
d'une bande de store (22) qui est fixée par un bord à l'axe d'enroulement (23) et dont l'autre bord, qui est éloigné de l'axe d'enroulement (23), est relié à une barre de traction (21) qui porte des coulisseaux (30) à ses extrémités,
de moyens de compensation (78, 79) élastiques qui sont agencés pour centrer l'axe d'enroulement (23) entre les dispositifs de montage (47),
de deux glissières (19, 25) qui sont fixées dans le véhicule automobile et commencent sur la plage arrière (12) et dans lesquelles se déplacent les coulisseaux (30) de la barre de traction (21) et dans lesquelles des éléments de poussée (38, 39) linéaires sont guidés de façon à résister au flambage,
d'un moteur à ressort (24) qui est associé à l'axe d'enroulement (23) pour mettre la bande de store (22) sous précontrainte dans le sens de l'enroulement sur l'axe d'enroulement (23),
d'un motoréducteur (36) qui est fixé à l'élément support (14) et qui est agencé pour mettre les deux éléments de poussée (38, 39) linéaires en mouvement, de façon synchrone et dans des sens opposés.

31. Store à enrouleur pour lunette arrière selon la revendication 30, **caractérisé en ce que** chaque dispositif de montage (47) est pourvu d'une pièce d'accouplement (55) tubulaire qui est conçue pour être reliée à la glissière (19, 25) respective et dans laquelle est guidé le coulisseau (30) respectif.

32. Store à enrouleur pour lunette arrière selon la revendication 30, **caractérisé en ce que** chaque glissière (19, 25) est fixée séparément dans la carrosserie du véhicule.

33. Store à enrouleur pour lunette arrière selon la revendication 30, **caractérisé en ce que** la glissière (19, 25) est une pièce moulée en matière plastique.

34. Store à enrouleur pour lunette arrière selon la revendication 30, **caractérisé en ce que** la glissière (19, 25) est une pièce en aluminium extrudé.

35. Store à enrouleur pour lunette arrière selon la revendication 30, **caractérisé en ce que** chaque glissière (19, 25) forme une portion qui est adjacente au dispositif de montage et qui peut être déplacée de façon limitée dans un plan comportant la portion concernée de la glissière (19, 25) et l'axe de l'axe d'enroulement (23).

36. Store à enrouleur pour lunette arrière selon la revendication 30, **caractérisé en ce que** pour chaque élément de poussée (38, 39), un tube de guidage (31, 32) s'étend entre le motoréducteur (36) et la pièce d'accouplement (55) ou la glissière (19, 25), lequel tube est de préférence élastique en flexion au moins par portions.

37. Store à enrouleur pour lunette arrière selon la revendication 30, **caractérisé en ce qu'**un tube logement (40, 41) pour chaque élément de poussée (38, 39) part du motoréducteur (36).

38. Store à enrouleur pour lunette arrière selon la revendication 30, **caractérisé en ce que** l'élément support (14), rapporté à sa dimension en longueur, et donc au niveau du milieu de l'axe d'enroulement (23), présente un moyen de centrage (57) qui coopère avec un moyen de centrage (59) sur la carrosserie (61).

39. Store à enrouleur pour lunette arrière selon la revendication 30, **caractérisé en ce que** le motoréducteur (36) est fixé à l'élément support (14) au milieu, rapporté à la dimension en longueur de l'élément support (14), et donc au niveau du milieu de l'axe d'enroulement (23).

40. Store à enrouleur pour lunette arrière selon la revendication 30, **caractérisé en ce que** l'accouplement entre le moteur à ressort (24) et l'axe d'enroulement (23) est réalisé de telle manière que seule une force de torsion puisse être transmise entre l'axe d'enroulement (23) et le moteur à ressort (24).

41. Store à enrouleur pour lunette arrière selon la revendication 30, **caractérisé en ce que** le moyen de compensation (78, 79) élastique comprend deux ressorts qui sont chacun insérés entre une extrémité de l'axe d'enroulement (23) et le dispositif de montage (47) associé.

42. Store à enrouleur pour lunette arrière selon la revendication 41, **caractérisé en ce que** le ressort (78, 79) est constitué d'un ressort hélicoïdal de compression.

43. Store à enrouleur pour lunette arrière selon la revendication 30, **caractérisé en ce que** l'élément support (14) présente sur sa face inférieure (45) des nervures (66) qui forment des cellules hexagonales, semblables à une structure alvéolaire.

44. Store à enrouleur pour lunette arrière selon la revendication 30, **caractérisé en ce que** l'élément support (14) présente sur sa face inférieure au moins une rainure (81) destinée à former un tube logement.
